(19)

Europäisches
Patentamt
European
Patent Office
Office européen
des brevets

(11) **EP 4 293 511 A1**

(12) **EUROPEAN PATENT APPLICATION**

(43) Date of publication:
**20.12.2023 Bulletin 2023/51**

(21) Application number: **22178674.2**

(22) Date of filing: **13.06.2022**

(51) International Patent Classification (IPC):
**G06F 9/50** *(2006.01)* **H04W 72/04** *(2023.01)*

(52) Cooperative Patent Classification (CPC):
**G06F 9/5011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fraunhofer-Gesellschaft zur Förderung
der angewandten Forschung e.V.
80686 München (DE)**

(72) Inventor: **CHARLISH, Alexander
53343 Wachtberg (DE)**

(74) Representative: **2SPL Patentanwälte PartG mbB
Landaubogen 3
81373 München (DE)**

(54) **APPARATUS FOR A SENSOR OR EFFECTOR, SENSOR OR EFFECTOR SYSTEM AND
APPARATUS FOR CONTROLLING RESOURCES TO BE ALLOCATED TO A TASK**

(57) An apparatus for a sensor or effector is provided. The apparatus comprises interface circuitry configured to receive data indicating that a resource of a further sensor or effector is allocated to a task. The apparatus further comprises processing circuitry configured to determine a resource of the sensor or effector to be allocated to the task using the data.

Fig. 1

## Description

### Field

The present disclosure relates to resource allocation. Examples relate to an apparatus for a sensor or effector, a sensor or effector system, an apparatus for controlling resources to be allocated to a task, a method for determining a resource of a sensor or effector and a method for controlling resources to be allocated to a task.

### Background

An increasing number of interconnected sensors and effectors may provide their resources for jointly executing tasks. Additionally, the enhanced reconfiguration scopes of the sensors and effectors as well as the numerous tasks and objectives of the system operators may challenge resource optimizations. Hence, there may be a demand for an improved resource allocation.

### Summary

The demand may be satisfied by the subject matter of the independent claims.

According to a first aspect, the present disclosure relates to an apparatus for a sensor or effector. The apparatus comprises interface circuitry configured to receive data indicating that a resource of a further sensor or effector is allocated to a task. The apparatus further comprises processing circuitry configured to determine a resource of the sensor or effector to be allocated to the task using the data.

According to a second aspect, the present disclosure relates to a sensor or effector system. The sensor or effector system comprises an apparatus for a sensor or effector as described herein. The sensor or effector system further comprises the sensor or effector. The sensor or effector is configured to execute the task using the determined resource of the sensor or effector.

According to a third aspect, the present disclosure relates to an apparatus for controlling resources to be allocated to a task. The apparatus comprises processing circuitry configured to generate data indicating that a resource of a sensor or effector is allocated to the task. The apparatus further comprises interface circuitry configured to send the data for allocating a resource of a further sensor or effector to the task.

According to a fourth aspect, the present disclosure relates to a method for determining a resource of a sensor or effector. The method comprises receiving data indicating that a resource of a further sensor or effector is allocated to a task. The method further comprises determining the resource of the sensor or effector to be allocated to the task using the data.

According to a fifth aspect, the present disclosure relates to a method for controlling resources to be allocated to a task. The method comprises generating data indicating that a resource of a sensor or effector is allocated to the task. The method further comprises sending the data for allocating a resource of a further sensor or effector to the task.

### Brief description of the Figures

Some examples of apparatuses and/or methods will be described in the following by way of example only, and with reference to the accompanying figures, in which

Fig. 1 illustrates an example of an apparatus for a sensor or effector;

Fig. 2 illustrates an example of a sensor or effector system;

Fig. 3 illustrates an example of an apparatus for controlling resources to be allocated to a task;

Fig. 4 illustrates an example of a method for determining a resource of a sensor or effector;

Fig. 5 illustrates an example of a method for controlling resources to be allocated to a task;

Fig. 6 and Fig. 7 illustrate a resource-against-utility plot of a first and a second example of a resource-utility function, respectively;

Fig. 8a to 8c illustrate examples of an interconnected system;

Fig. 9a and 9b illustrate an example of an utility achievable by a sensor 1 and a sensor 2 depending on the allocated resource for a task 1 and a task 2, respectively; and

Fig. 10a to 10d illustrate examples of concave majorants for a sensor 1 and a task 1, a sensor 2 and the task 1, the sensor 1 and a task 2, the sensor 2 and the task 2, respectively.

**Detailed Description**

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

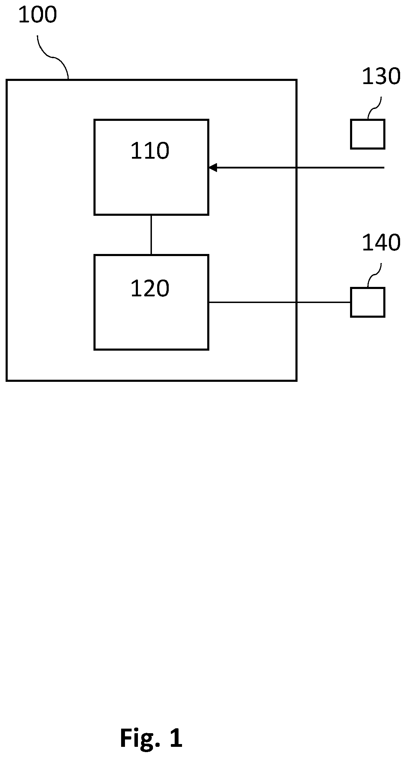

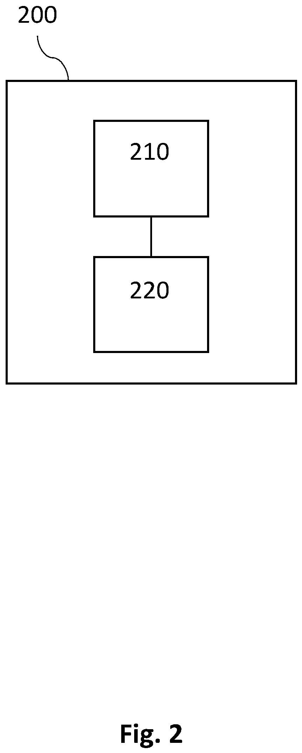

**Fig. 1** illustrates an example of an apparatus 100 for a sensor or effector. The apparatus 100 may be, e.g., part of the sensor or effector, as explained with reference to Fig. 2. Alternatively, the apparatus 100 may be external to the sensor or effector and communicatively coupled to the sensor or effector.

As used herein, the term "sensor" or "effector" may refer to any (configurable) sensor or effector providing resources and being capable of performing a task. For instance, the sensor or effector may be any device for sensing or changing, respectively, any physical, chemical, or biological quantity in a surrounding of the sensor or effector. In some examples, the sensor may be at least one of a radar sensor and a radio frequency sensor and the effector may be at least one of a radar effector or a radio frequency effector. For instance, the sensor or effector may be a multifunction radio frequency system. The sensor or effector may comprise, e.g., an antenna such as an active phased-array antenna providing a resource such as time budget, energy or bandwidth. A sensor may be capable of performing a sensing task, e.g., - in the case of an antenna - a task such as active target tracking of a specific target, searching a specific volume, confirming a specific target or electronic surveillance for a specific frequency and angle region. An effector may be capable of causing any kind of effect in its surrounding, e.g., - in the case of an antenna - performing a task such as communicating a specific message or electronic attack (jamming) against a specific emitter. It is to be noted that a sensor and an effector may be implemented as one and the same device, i.e., a sensor may be able to perform an effector task or vice versa. For the sake of simplicity, some text passages of the present disclosure solely refer to a sensor where the same applies analogously to an effector. Further, the term "sensor or effector" may be abbreviated to "sensor/effector" and the term "sensors and/or effectors" may be abbreviated to "sensors/effectors".

The apparatus 100 comprises interface circuitry 110 and processing circuitry 120. The interface circuitry 110 and/or the processing circuitry 120 may, e.g., be computer-implemented. The processing circuitry 120 may, for instance, be a single dedicated processor, a single shared processor, or a plurality of individual processors, some of which or all of which may be shared, a digital signal processor (DSP) hardware, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the functions of the processing circuitry 120 as described herein. The processing circuitry 320 may optionally be coupled to, e.g., read only memory (ROM) for storing software, random access memory (RAM) and/or non-volatile memory. The interface circuitry 110 is communicatively coupled to the processing circuitry 120 for data exchange.

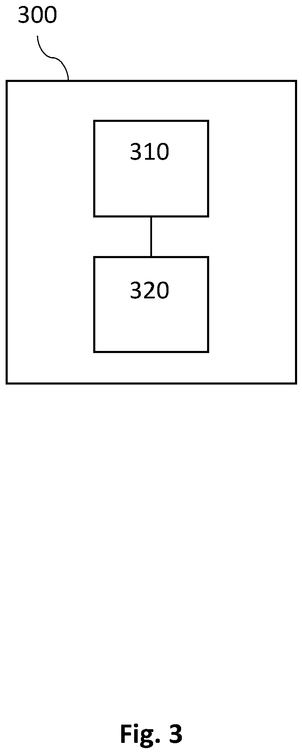

The interface circuitry 110 is configured to receive data 130 indicating that a resource of a further sensor or effector is allocated to a task. The interface circuitry 110 may receive the data 130 via a wired or wireless communication. The interface circuitry 110 may receive the data 130, e.g., from the further sensor or from an apparatus for controlling resources to be allocated to the task (i.e., a "task manager" or "task management layer" which may be superordinate to the apparatus 100) as described with reference to Fig. 3.

The further sensor or effector may be, e.g., a sensor or effector of a similar type like the sensor or effector, i.e., the further sensor or effector may be a radar sensor or effector if the sensor or effector is a radar sensor or effector, too. Regardless of the latter, the further sensor may exhibit other or similar functionality, e.g., regarding a resource management, compared to the sensor. The sensor and the further sensor may be part of one or more (interconnected) multifunctional radio frequency systems. The functions performed by the multifunctional radio frequency system may be described by task classes such as active target tracking or search. The multifunctional radio frequency system may realize the functions by setting a configuration (control parameters) of the sensor and the further sensor, e.g., - in case of active phased-array antennas - the multifunctional radio frequency system may control the antennas to emit a radio frequency signal with a specific beam position, dwell time, waveform, or energy (as specified by the configuration).

The data 130 may, in some examples, indicate that a resource of more than one further sensor or effector is allocated to the task. Or the interface circuitry 110 may be configured to receive further data indicating that a resource of one or more third sensor or effector of the plurality of sensors and/or effectors is allocated to the task. This further data may, additionally, be considered for the determination of resource allocations for the sensor or effector. It is to be noted that the indication encoded in the data 130 that a resource of the further sensor is allocated to the task data does not necessarily, in some examples, provide the information about the resource of the further sensor itself but, e.g., parameters of a resource-utility function encoding said resource.

The processing circuitry 100 is configured to determine a resource 140 of the sensor or effector to be allocated to the task using the data 130. For instance, the task may require certain resources for its operation which are provided by the sensor and the further sensor. The sensor and the further sensor may be capable of executing the task by providing a respective resource. For instance, the sensor and the further sensor may provide resources for jointly executing the task, i.e., the sensor and the further sensor may jointly provide a global resource to be allocated to the task wherein the sensor and the further sensor each provide a respective share of the global resource. The processing circuitry 100 may consider the data 130 for determining the resource 140 of the sensor as a share of the global resource. The processing circuitry 100 may determine the resource 140 based on any suitable resource allocation algorithm, such as rule-based or quality-of-service (QoS) algorithms.

The allocation of the resource 140 of the sensor or of the resource of the further sensor to the task may be considered a reservation of a share of a (local) total resource of the sensor or further sensor for being consumed for executing the task. For instance, the sensor and the further sensor may have a limiting budget (total resource) for each type of resource (time budget, energy budget, computing budget, etc.) which is available for executing the task and, optionally, at least one further task which is, e.g., in progress or called up temporarily in parallel to the task.

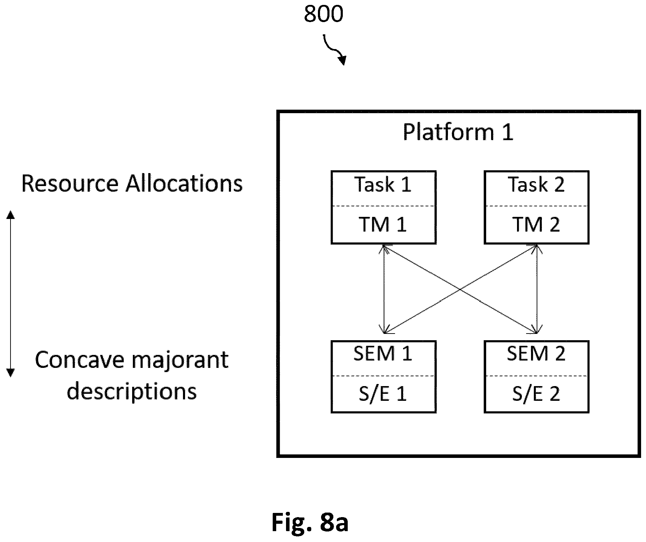

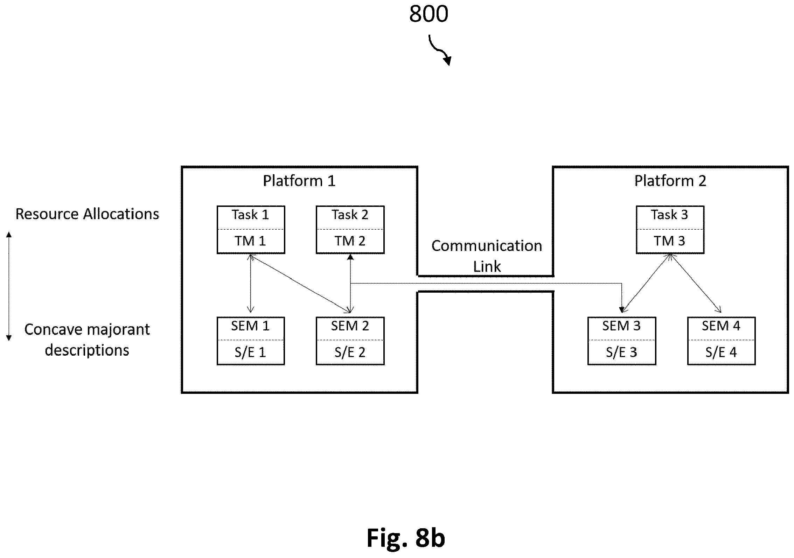

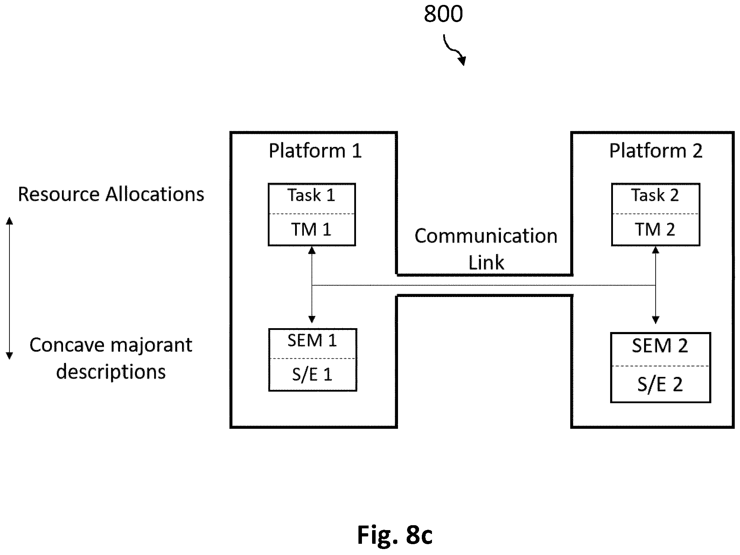

The apparatus 100 may be considered in the context of a communicatively interconnected system of a plurality of sensors and/or effectors - comprising the sensor or effector and the further sensor or effector - and configured to execute the task and, optionally, at least one further task. Unlike centralized approaches of conventional systems, the apparatus 100 may provide a local determination of the resource 140 of the sensor or effector which contributes to the global resource of the interconnected system. This may enable a distributed computation of the resources (i.e., based on edge computing) in a sensor/effector network which may result in a simplification of said computation. Further, the distributed computation of the resources may decrease the interconnected system's failure rate and enable subparts (platforms) of the interconnected systems to contribute to the computation even with a low computational capability. Examples of an interconnected system are described with reference to Fig. 8a, 8b and 8c.

The interconnected system may, e.g., be configured to receive at least one task generated automatically at the system or triggered by an operator. The task generation may initiate a (re)distribution of resources of the plurality of sensors and/or effectors to the task (and potentially to further active tasks). The latter may be based on a QoS consideration, i.e., the resources may be allocated such that the global resource is kept low, and a high utility of the task is achieved (e.g., a highest utility to be reached with the given resources).

An overall mathematical problem of the resource distribution among the plurality of sensors and/or effectors may have the following characteristics: The task and, optionally, at least one further task has to be performed by sensors and/or effectors. Each task may serve a respective objective where the task may be independent of or dependent on the further task. A single task may be executed by multiple sensors or effectors. Multiple operators at different platforms (e.g., multifunctional radio frequency systems) may generate tasks that are performed globally (i.e., by several or all platforms). The sensors and/or effectors may be spatially distributed. The resources of each contributing sensor and effector may need to be allocated to the active tasks. It may be necessary to configure the control parameters for each task at each sensor or effector in accordance with the allocated resources in order to use the sensor or effector effectively. The resource allocation and control parameter configuration may be required to meet quality constraints for tasks subject to resource constraints of the sensors and effectors in the system, hence, a QoS optimization may be performed.

The processing circuitry 120 may determine the resource 140 of the sensor using any suitable QoS algorithm, e.g., discrete and iterative resource allocation approaches such as Q-RAM (Quality of Service based Resource Allocation Model), analytical (direct) and/or continuous resource allocation approaches. In some examples, the processing circuitry 120 is configured to determine the resource 140 of the sensor or effector using a resource-utility function of the task.

The resource-utility function may be any function suitable for mapping resources to utilities, e.g., discrete values of resources assigned to corresponding utilities (e.g., for Q-RAM), a rational function, an exponential function, a linear function, a power function, or a polynomial function (e.g., for continuous resource allocation approaches).

For instance, based on the control parameter configurations and resource allocations, the task may achieve a certain quality which results in a utility representing how satisfied a task owner is with the quality that is achieved in comparison to other tasks competing for the same sensor and/or effector resources. This chain of mappings from resources to configurations, to qualities and to utility may be represented by the resource-utility function mapping from resources as an input to utility as an output. For instance, the resource-utility function may be denoted $u_k(\mathbf{r}_k; \theta_k)$, where $\mathbf{r}_k$ represents resource allocations and $\theta_k$ represents parameters that describe the current task state of the task. By using a resource-utility function, the apparatus 100 may enable the implementation of a QoS optimization which - unlike other resource allocation methods such as rule based techniques - takes quality requirements into consideration when configuring the task execution. The resource-utility function may enable the realization of Q-RAM (e.g., when the resource-utility function represents discrete resource values assigned to a corresponding utility) as well as of continuous resource allocation algorithms.

The QoS optimization may increase (ideally, maximize) the utility produced by active tasks by optimizing the resource allocations for the tasks at each sensor or effector. The control parameter configurations at each sensor or effector may be chosen jointly with the resource allocation or, alternatively, in a subsequent step. In a conventional system, a centralized task manager may control the QoS optimization of the resource allocation and control parameter configuration of sensors and/or effectors. This may be challenging due to the number of degrees of freedom in the determination of the resource allocation as well as the spatial separation of the sensors and/or effectors.

The conventional QoS optimization may be expressed mathematically by the following Equation 1:

$$\max_{\mathbf{r}} \sum_{k=1}^{N_k} \omega_k \cdot u_k(\mathbf{r}_k; \boldsymbol{\theta}_k)$$

$$\text{subject to:} \sum_{k=1}^{N_k} r_{klm} \leq \hat{r}_{lm} \quad \forall\, l \in \{1, \dots, N_L\}, m \in \{1, \dots, N_{Ml}\}$$

Equation 1

where:

$N_K$ is the number of tasks; $N_L$ is the number of sensors and/or effectors; $N_{Ml}$ is the number of resource types at sensor or effector $l$; $r_{klm}$ represents (e.g., in form of a scalar) the resource $m$ being allocated to task $k$ at sensor or effector $l$; $\mathbf{r}_k = [\mathbf{r}_{k1}^T, \dots, \mathbf{r}_{kN_l}^T]^T$ represents (e.g., in form of a vector) resource allocations for task k, where each element $\mathbf{r}_{kl}$ represents resource allocations for task $k$ at sensor or effector $l$; $\mathbf{r}_{kl} = [r_{kl1}, \dots, r_{klN_{Ml}}]^T$ represents resource allocations for task $k$ at sensor or effector $l$, where each element $r_{klm}$ represents the allocation of resource $m$ for task $k$ at sensor or effector $l$; $\mathbf{r} = [\mathbf{r}_1^T, \dots, \mathbf{r}_{N_K}^T]^T$ represents (e.g., in form of a stacked vector) the resource allocations of all active tasks, and hence, allocations of all resource types for all tasks at all sensor and/or effectors; $\omega_k \in [0,1]$ is an optional importance weighting representing the relative importance of tasks; $\theta_k$ represents at least one parameter describing the current task state of task k, quality requirements of the task or any other parameters influencing quality and utility achieved by the task; $\hat{r}_{lm}$ represents the limit of the resource availability (total resource) for resource $m$ at sensor or effector $l$.

Note that the above problem described by Equation 1 may be a simplification of a conventional QoS problem since the function $u_k(\mathbf{r}_k; \theta_k)$ represents a composition of a control parameter function mapping from resource to a control parameter configuration $\mathbf{r}_k \mapsto \mathbf{v}_k$, a quality function mapping from a control parameter configuration to a quality $\mathbf{v}_k \mapsto \mathbf{q}_k$, and a utility function mapping from quality to utility $\mathbf{q}_k \mapsto u_k$. For instance, the control parameter configuration of $\mathbf{v}_k$ may represent parameters such as the repetition interval, the duration of jobs, transmitter or receiver configuration for all sensors and/or effectors supporting task k. The control parameter configuration may affect the resource allocation, the quality or both. The problem described by Equation 1 may be equivalent to a minimization of cost instead of maximization of utility.

The resource allocation $\mathbf{r}$ may be optimized in order to increase the summation of utility produced over the $N_k$

tasks, whereby each task's utility may be weighted by an importance value $\omega_k$, given that each task has the current task state described by the parameters $\theta_k$ for task k. This optimization may be performed subject to the resource constraints, i.e., to the condition that all of the $N_{Ml}$ resources at each of the $N_L$ sensor or effector shall not exceed the respective limit $\hat{r}_{lm}$.

However, the conventional QoS optimization may suffer from the variable r having in many cases an extremely high number of dimensions. To demonstrate the complexity of the conventional QoS optimization, an example is given in the following: Assuming 500 tasks and 20 sensors and/or effectors, each having limited resources of a single resource type. Consequently, the variable r has 10,000 dimensions. This may lead to difficulties in solving the QoS problem (e.g., regarding computation or time resources) and the solution's complexity may scale poorly with regard to the number of sensors and/or effectors. In addition, a single centralized solver would be needed to find the solution and to communicate the solution of **r,** e.g., for all sensors and/or effectors possibly distributed over several spatially separated platforms of the interconnected system. The computational complexity may be even higher with an increasing number of interdependent resources and several resource types. A conventional system may need to perform a high-dimensional convex hull operation, which is computationally demanding.

By contrast, the apparatus 100 may enable the conventional QoS optimization to be divided into simpler subproblems. Hence, the resource management may be distributed, and a central resource manager may be unnecessary, resulting in a more efficient resource management. Optionally, a superordinate task manager may still support the global resource allocation. With respect to the above-mentioned example of 500 tasks and 20 sensor and/or effectors that each provide a single resource type, the apparatus 100 may enable a break down of the conventional QoS optimization to 20 sub-problems, each with 500 dimensions. Additionally, the sub-problems may be further broken down by task, leading to $N_k\ N_L$ = 10,000 problems each having just one dimension. This may constitute a reduction in the complexity of the QoS problem. Additionally, the apparatus 100 may provide a solution to resource allocation problems with interdependencies between tasks, which a conventional resource allocator such as one using a centralized Q-RAM method may be uncapable of.

The determination of a global resource for a task may, thus, be broken down into several sub processes, e.g., each performed by a respective sensor or effector, for determining a specific local resource contributing to the global resource. The apparatus 100 may, e.g., optimize the resource allocation of a respective sensor or effector. The apparatus 100 may, e.g., locally, determine solely the resource 140 of the sensor while considering the resource allocation of the further sensor. In some examples, the processing circuitry 120 is configured to determine the resource 140 of the sensor or effector without a total resource of the sensor or effector exceeding a predefined threshold, wherein the total resource is to be allocated to the task and at least one further task to be executed by the sensor or effector. This may be advantageous for multiple tasks being executed by the sensor simultaneously, thus, demanding resources from the sensor which exhibits a finite source of resources (the predefined threshold). For instance, the processing circuitry 120 may determine the resource 140 of the sensor such that it solves the following QoS problem of Equation 2:

$$\max_{\hat{\mathbf{r}}_l} \sum_{k=1}^{N_k} \omega_k \cdot u_k(\mathbf{r}_{kl}; \boldsymbol{\theta}_k, \mathbf{r}_{k/l})$$

$$\text{subject to: } \sum_{k=1}^{N_k} r_{klm} \leq \hat{r}_{lm} \quad \forall\, m \in \{1, \dots, N_{Ml}\}$$

Equation 2

Based on Equation 2, only the resource allocation $\hat{\mathbf{r}}_l = \left[\mathbf{r}_{1l}, \dots, \mathbf{r}_{N_k l}\right]$ for the sensor or effector *l* needs to be optimized and the current resource allocations $\mathbf{r}_{k\backslash l}$ of the further sensor or effector may be considered fixed parameters of the problem expressed by Equation 2. Since, in this case, the processing circuitry 120 may only determine the resource allocation of the sensor or effector *l*, the resource constraints may only refer to the total resource $(\hat{r}_{lm})$ at the sensor or effector *l*. This may simplify the optimization of resource allocations.

Similarly, the further sensor or effector may be controlled by a respective resource allocator (a further apparatus like the apparatus 100) which determines its resource to be allocated to the task while considering the resulting resource of the sensor, e.g., by using Equation 2 for the further sensor or effector. For instance, the apparatus 100 may further comprise second interface circuitry configured to send second data indicating the determined resource for determining a global resource of the sensor or effector and the further sensor or effector to be allocated to the task. For instance, the resource allocator assigned to the further sensor or effector may receive the second data and determine the resource of the further sensor or effector. Alternatively, a task manager of the task may receive the second data and support the determination of the resource of the further sensor or effector. In this manner, the apparatus 100 may support an optimization of resource allocations of the further sensor or effector and, thus, the determination of the global resource of the task. In some examples, the interface circuitry may comprise the second interface circuitry (and/or further interface circuitries).

In some examples, the resource-utility function - used to determine the resource 140 - represents a concave majorant (e.g., an upper limit) of resource-utility configurations. For instance, the resource-utility function may partially describe the concave majorant, e.g., by a set of discrete resource-utility values (i.e., utility values matching specific resource values which may be known from a predefined mapping) on or near the concave majorant or completely describe the concave majorant. In the case of a complete description, a continuous mapping may be enabled and - compared to a high number of resource-utility values which may be required for mapping accuracy - the data size of data encoding the resource-utility function may be reduced (e.g., the data size of the data 130 in case it encodes the resource-utility function).

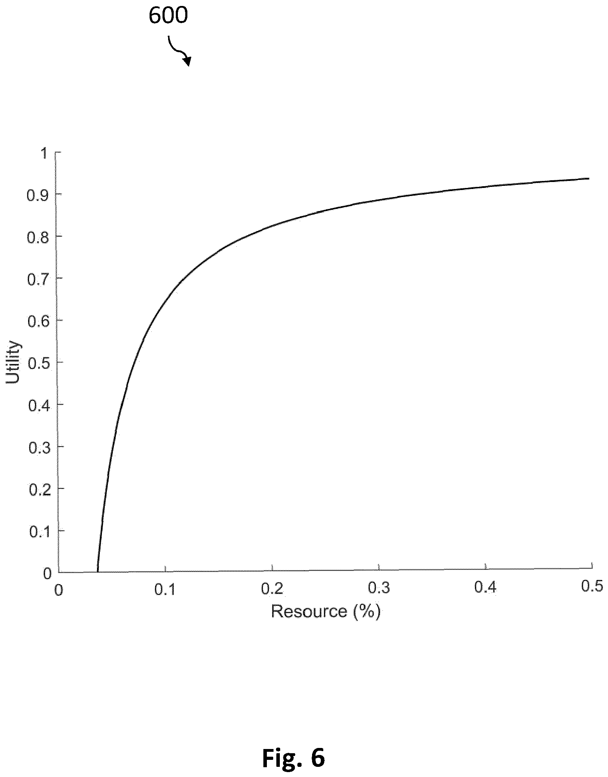

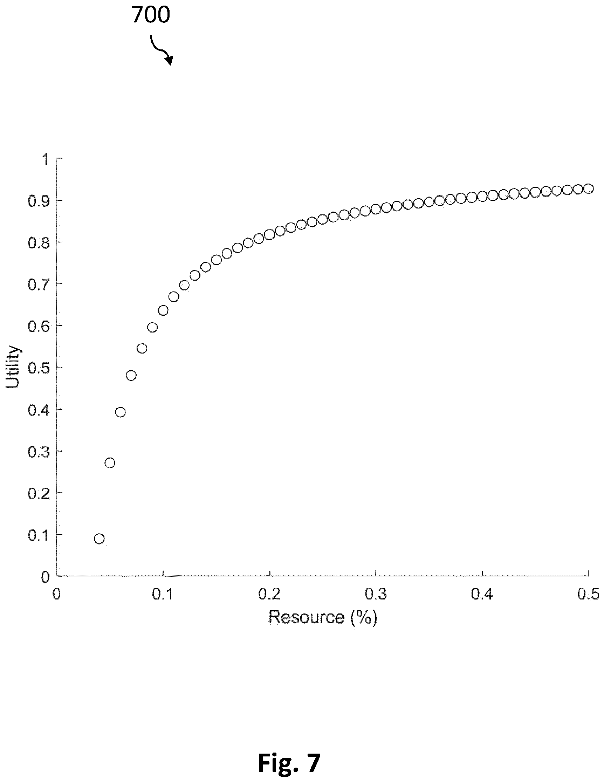

The apparatus 100 may, by using the resource-utility function representing a concave majorant, ensure that the distributed solving of the sub-problems such as expressed by Equation 2 converges to the optimal solution of the centralized problem expressed by Equation 1. This may be due to a Nash equilibrium existing for concave functions. For instance, the above-mentioned function $u_k(\mathbf{r}_k; \theta_k, \mathbf{r}_{k\setminus l})$ may be concave and non-decreasing and may approximate a convex hull around the resource-utility configurations of the task. The resource-utility function may, for example, approximate the concave majorant of the convex hull. The concave majorant may correspond to a high (or Pareto-efficient or highest) utility that may be achieved by the task with a given resource. A resource-utility configuration may be a representation of a resource of a task and a corresponding utility of the task in a resource-against-utility plot. Examples of a concave majorant in case of a continuous resource-utility function and in case of a discrete resource-utility function (such as for use of Q-RAM) are illustrated in Fig. 6 and Fig. 7, respectively.

In some examples, the resource-utility function exhibits parameters and thereby describes a mathematical relationship between resources and corresponding utilities in dependence of the parameters. The parameters may be unspecified variables independent of an input of the resource-utility function. The parameters may be specific for the task, the task state of the task and/or the resource allocation of the further sensor, i.e., a mapping between task state and resource allocations to parameters may be given. The parameters may be chosen such that the parameterized resource-utility function represents the concave majorant. The parameters may, e.g., fit the resource-utility function to the concave majorant. The parameters may give a higher degree of freedom for dynamically adapting the resource-utility curve (described by the resource-utility function) to different tasks, task states and changing resource allocations of the further sensor.

By using a resource-utility function exhibiting parameters, the apparatus 100 may enable a continuous mapping of resources to utility which may decrease computational efforts for generating resource allocations in comparison to resource allocation methods, such as Q-RAM, without losing preciseness in representing realistic task behavior. The usage of a parameterized function may enable a determination of the resource 140 of the sensor without using an iterative resource determination. This may evade a discretization of a control parameter space, i.e., eliminating the need to individually evaluate the resource function, quality function and utility function for discretized values. With a suitable resource-utility function, an analytic or closed form solution for the resource allocation may be found that requires negligible computation.

In some examples, the processing circuitry 120 is further configured to determine the resource 140 of the sensor or effector by solving a Lagrangian function for finding a maximum of a combined resource-utility function of the task and a further task. For instance, the processing circuitry 120 may find a solution to the constrained optimization problem expressed by Equation 2 (where the first term represents a combined resource-utility function) based on a Lagrangian function (e.g., with the help of Lagrangian multipliers or Karush-Kuhn-Tucker multipliers). The processing circuitry 120 may solve the Lagrangian function by using at least one of an analytical solver, a closed form solver, a numerical solver, i.e., the processing circuitry 120 may solve a dual problem and a stationarity condition associated with the Lagrangian function in analytic form, closed form, or with numerical methods.

With the help of the Lagrangian function, the apparatus 100 may provide a fast solution to the combined resource-utility function which is especially beneficial when the sensor is required to execute multiple tasks.

An example of a (rational) resource-utility function exhibiting parameters and representing a concave majorant is expressed by Equation 3 below:

$$u_k\left(r_{kl}; \boldsymbol{\theta}_k, \mathbf{r}_{k\backslash l}\right) = \frac{ar_{kl} + b}{r_{kl} + c}$$

Equation 3

where:

the parameters {a, b, c} encode the task state $\theta_k$ and the resource $r_{k\backslash 1}$ of the further sensor.

Examples of parameters for the resource-utility function of Equation 3 may be {$a$ = 1, $b$ = -3.64 × $10^{-4}$, $c$ = -5.017 × $10^{-14}$} or {$a$ = 1, $b$ = -3.41 × $10^{-3}$, $c$ = -4.834 × $10^{-11}$}. When concrete values are applied to the parameters, the resource-utility function may be denoted "parameterized resource-utility function".

In some examples, the data 130 indicates the resource-utility function and the resource-utility function exhibits at least one parameter encoding the resource of the further sensor or effector. The apparatus 100 may, then, determine the resource 140 of the sensor based on the parameterized resource-utility function. For instance, an apparatus for controlling resources to be allocated to the task (task manager) external to the apparatus 100 may communicate the data 130 to the apparatus 100. This task manager may determine the resource-utility function and its parameters. As the parameters may, in the said examples, encode the resource of the further sensor, there may be no need to communicate the values of the resource of the further sensor. This may simplify the data transmission between the task manager and the apparatus 100, keep the operation of the further sensor confidential or save memory of the apparatus 100 (e.g., in case of numerous further sensors and effectors). Further, a predefined parameterized resource-utility function determined by the task manager may raise the reliability of the global resource management for the task as the task manager may control the resource allocation of all sensors and/or effectors contributing to the task.

Alternatively, the interface circuitry 110 is further configured to receive third data indicating a task state of the task. The processing circuitry 120 may be configured to determine at least one parameter of the resource-utility function using the resource of the further sensor or effector and the task state and determine the resource 140 of the sensor or effector using the parameterized resource-utility function. Thus, the apparatus 100 may determine the resource-utility function and its parameters itself. Therefore, the data 130 may indicate the concrete values of the resource of the further sensor. In this case, the apparatus 100 may be independent of a task manager and may, e.g., communicate directly with resource allocators of the further sensor and thereby exchange information about local resource allocations and current task states of the task. The latter may decrease the failure rate of the complete interconnected system since no superordinate task manager is needed.

In case the resource-utility function indicates a set of discrete resource-utility values (such as for use of Q-RAM), the processing circuitry 120 may be configured to determine the resource 140 of the sensor or effector using the resource of the further sensor or effector, the task state and the set of resource-utility values. For instance, the processing circuitry 120 may select, e.g., by iterative approximation, a resource-utility value from the set of resource-utility values matching the task state and the resource of the further sensor or effector.

The interconnected system may benefit from the use of the apparatus 100 and, optionally, further resource allocators which are based on the technique of the apparatus 100 and dedicated to further sensors or effectors of the interconnected system: The apparatus 100 may enable the sensors and/or effectors of the interconnected system to determine a respective resource allocation independently of a centralized resource allocator. Each sensor or effector may configure itself to use its resource allocation to execute the task.

In some examples, the apparatus 100 further comprises third interface circuitry configured to send fourth data indicating the determined resource of the sensor or effector for triggering an update of the resource of the further sensor or effector. The interface circuitry 110 may further be configured to receive fifth data indicating that an updated resource of the further sensor or effector is allocated to the task. The processing circuitry 120 may further be configured to determine an updated resource of the sensor or effector to be allocated to the task using the fifth data. Firstly, the latter updating of the resource 140 of the sensor may be beneficial for dynamically react to changing environmental conditions, operation requirements, task states, task requests or alike. For instance, a specific resource allocation for each of the sensor and the further sensor may be required for a specific time duration (e.g., depending on an update rate). Therefore, the resource allocations may be determined, e.g., sequentially and continuously to define a schedule of resource allocations. Secondly, the said updating of the resource 140 of the sensor may be beneficial for iteratively approaching an optimum of the resource usage, i.e., reaching closer to the highest possible utility with lowest resource usage. In the latter case, the updating may be executed several times until a desired proximity to the optimum is reached, e.g., until a difference between the utility reached in one iteration (update) and the utility reached in the subsequent iteration is below a predefined threshold, i.e., until no major improvements may be expected for a further subsequent iteration.

In some examples, the interface circuitry 110 is further configured to receive sixth data indicating an updated task state of the task. The processing circuitry 120 may be configured to determine at least one updated parameter of the resource-utility function using the updated resource of the further sensor or effector and the updated task state and determine the updated resource of the sensor or effector using the updated parameterized resource-utility function. This may be useful for the case that the apparatus 100 is independent of a superordinate task manager, or no task manager is provided.

In other examples, the fifth data indicates at least one updated parameter of the resource-utility function encoding the updated resource of the further sensor or effector. The processing circuitry 120 may be configured to determine the updated resource of the sensor or effector using the updated parameterized resource-utility function. This may be useful in case there is a superordinate task manager which determines the resource-utility function and the parameters and communicates them to the sensors and/or effectors. It is to be noted that - in case that there is a general consensus in the interconnected system that the apparatus 100 (or additionally further resource allocators) use a specific resource-utility function (e.g., for specific conditions), or that the resource-utility function communicated during initialization of the task shall be used for several iterations (e.g., until the task is fulfilled) - only the data 130 may solely indicate the parameters of this specific resource-utility function, i.e., a repeated communication of the resource-utility function may be unnecessary.

Alternatively, - in the case that the resource-utility function indicates a set of discrete resource-utility values - the updating may be realized in the following manner: The interface circuitry 110 may be further configured to receive sixth data indicating an updated task state of the task. The processing circuitry 120 may be configured to determine an updated resource of the sensor or effector using the updated resource of the further sensor or effector and the updated task state. For instance, the processing circuitry 120 may select an updated resource-utility value from the resource-utility values matching the updated task state and the updated resource of the further sensor or effector. Alternatively, the fifth data indicates at least one updated set of resource-utility values of the resource-utility function encoding the updated resource of the further sensor or effector. The processing circuitry 120 may be configured to determine the updated resource of the sensor or effector using the updated set of resource-utility values.

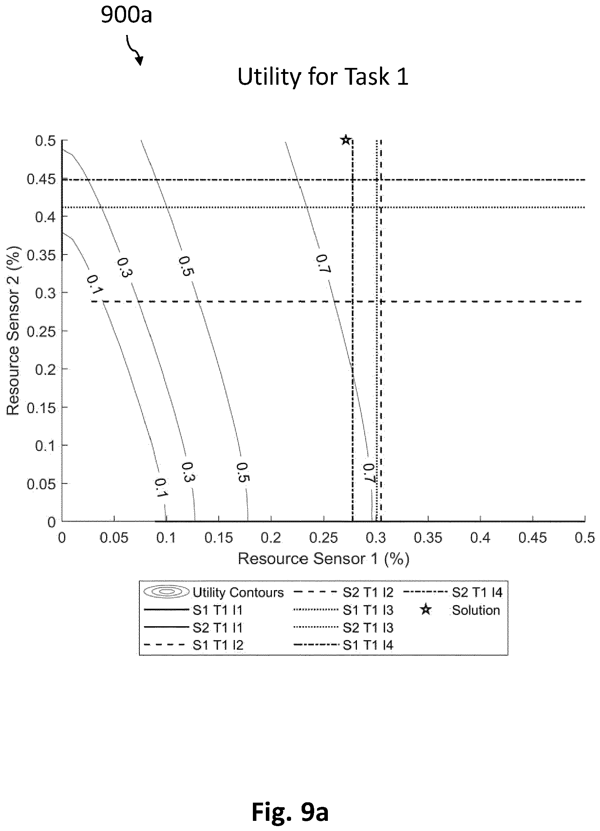

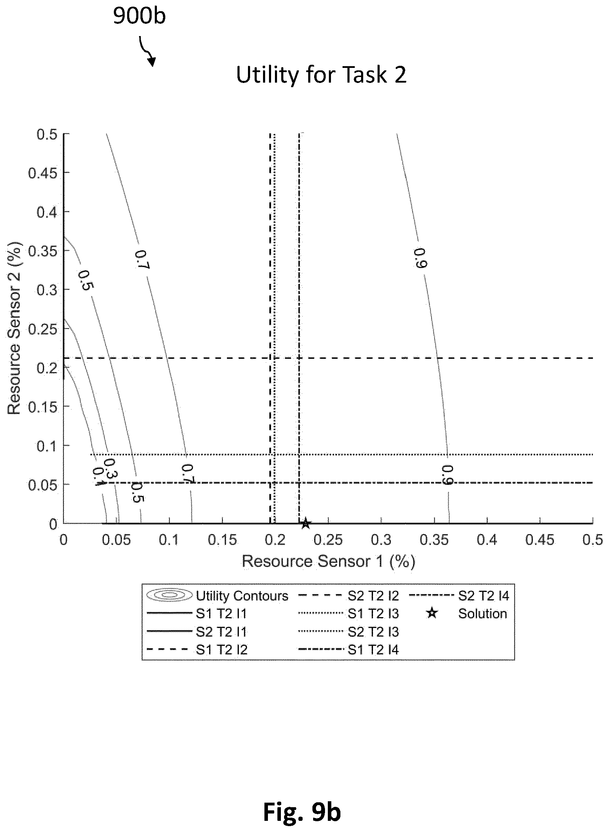

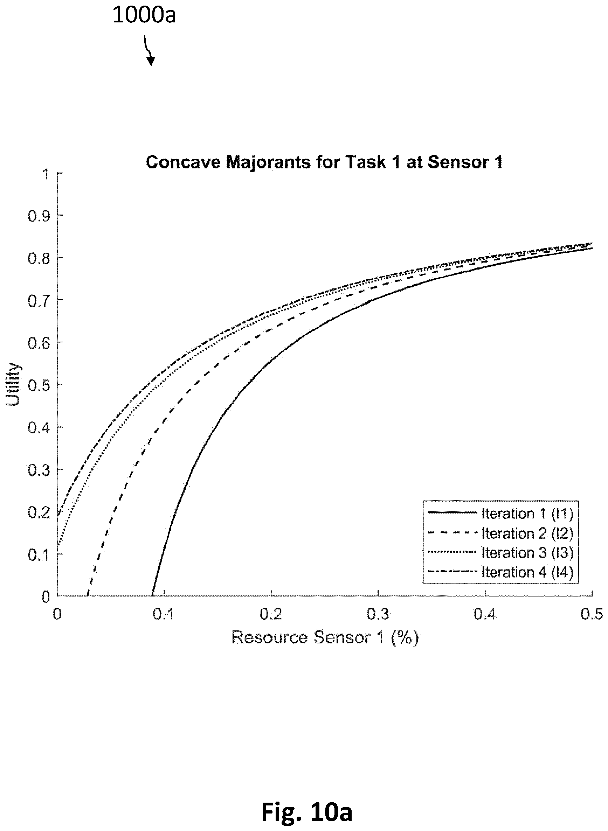

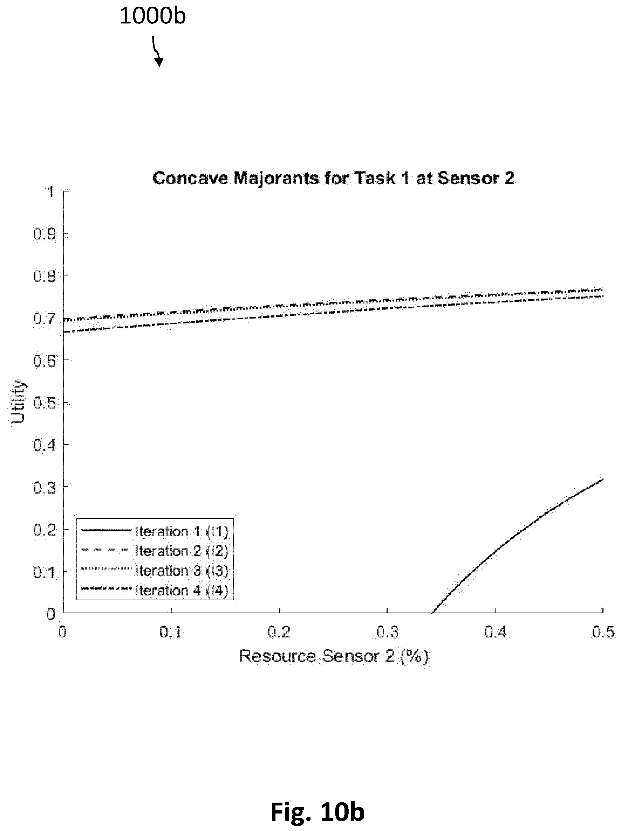

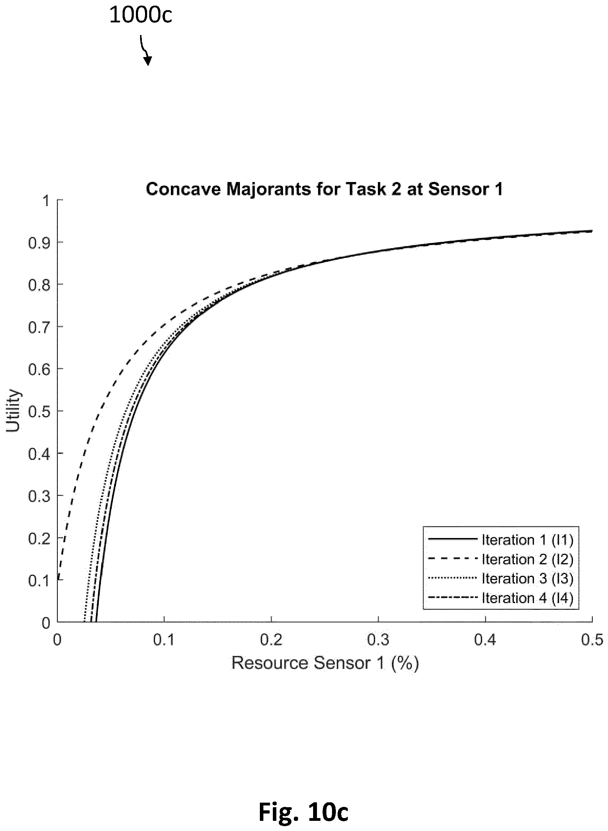

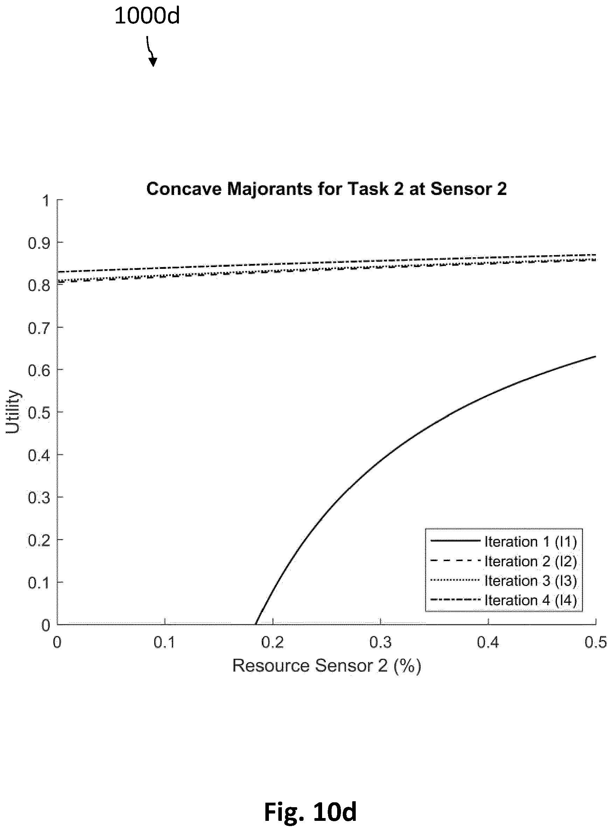

In case a task manager is provided, the task manager may communicate the data 130, e.g., including descriptions of concave majorants of a resource-utility function, to the apparatus 100 and to a further resource allocator of the further sensor. The apparatus 100 and the further resource allocator may, e.g., repeatedly, solve a respective sub-problem (e.g., an individual configuration of the resource-utility function) for a respective resource dimension (resource type) and considering a respective availability of resources (e.g., the total resource and resources allocated to further tasks), where the sub-problems may be part of a global resource allocation problem (e.g., Equation 1). After the apparatus 100 and the further resource allocator may have determined a valid resource allocation for the sensor or the further sensor, respectively, the resource allocations may constitute the global resource allocated to the task. In some examples, the apparatus 100 and the further resource allocator may use one and the same resource-utility function (but e.g., differently parameterized depending on the specific conditions and the addressed sensor or effector). This may ensure that the resource allocations are aligned to each other, thus, no resources may be wasted. The apparatus 100 and the further resource allocator may then communicate the determined resource 140 of the sensor or the determined resource of the further sensor to the sensor or the further sensor, respectively. The sensor and the further sensor may configure themselves (e.g., set their control parameters) in accordance with their respective resource allocation. The apparatus 100 and the further resource allocator may also communicate the solution to its sub-problem back to the task manager. The task manager may initiate an update of the data 130 (e.g., update the concave majorant) and send the updated data to the apparatus 100 and the further resource allocator which, in turn, may resolve the sub-problem based on the updated data. This process may iteratively repeat, e.g., until an equilibrium is reached for the global resource allocation problem. A concrete implementation example for an iteration process is described with reference to Fig. 9a, 9b, and Fig. 10a to 10d

An example of a sensor or effector system 200 is illustrated in **Fig. 2.** The sensor or effector system 200 comprises an apparatus 210 - as described herein - for a sensor or effector 220, such as apparatus 100. The sensor or effector system 200 further comprises the sensor or effector 220. The sensor or effector 220 is configured to execute the task using the determined resource of the sensor or effector (e.g., resource 140 of the sensor or effector). The apparatus 210 may be communicatively coupled to the sensor or effector 220 to transmit the determined resource to the sensor or effector 220. The system 200 may be advantageous since the resource allocation performed by the apparatus 210 and the sensor or effector 220 are jointly integrated into the sensor or effector system 200 which may enable a local resource allocation (for the sensor or effector 220) for a task executed by multiple sensors and/or effectors (including the sensor or effector 220), e.g., based on edge computing.

In some examples, the sensor and the effector 220 is at least one of a radar sensor and a radio frequency sensor or at least one of a radar effector or a radio frequency effector, respectively. The usage of the techniques described herein in the context of radio frequency or radar sensor and/or effectors may be beneficial since tasks, resource types, interdependencies between tasks, sensors and/or effectors contributing to the tasks and/or configuration possibilities of the sensors and/or effectors in said context may be usually numerous, thus, challenging conventional resource allocations methods, e.g., due to limited computing or memory resources available for resource allocation or the high dynamics which are required in said context.

Fig. 3 illustrates an example of an apparatus 300 for controlling resources to be allocated to a task. The apparatus 300 comprises processing circuitry 310 configured to generate data indicating that a resource of a sensor or effector is allocated to the task. The apparatus 300 further comprises interface circuitry 320 configured to send the data for allocating a resource of a further sensor or effector to the task. Note that the sensor or effector in this context may be the further sensor or effector in examples explained above, and vice versa.

The apparatus 300 may be a task manager in an interconnected systems of sensors and/or effectors contributing resources to the task. The apparatus 300 may control the global resource allocation of the task (and, optionally, also of further tasks). The apparatus 300 may be beneficial for such an interconnected system since it may raise the reliability of the global resource management for the task by providing a superordinate control entity. Further, the apparatus 300 may support or take over the resource allocation in case the sensor or effector is not equipped with a local resource allocator or in case the local resource allocator of the sensor or effector does not provide sufficient computing power. Therefore, the apparatus 300 may perform processes or intermediate steps of the processes explained in connection to an apparatus for a sensor or effector, such as apparatus 100, to a local resource allocator or to the proposed technique or one or more examples described above, e.g., with reference to Fig. 1.

In some examples, the apparatus 300 may further comprise second interface circuitry configured to receive second data indicating the resource of the sensor or effector. The processing circuitry is configured to generate the data using the resource of the sensor or effector. For instance, the apparatus 300 may be in, e.g., regular, exchange with a local resource allocator regarding its resource allocations to the task. This may enable a continuous update of the data for reacting to changing task states or environmental conditions.

In some examples, the second interface circuitry is further configured to receive third data indicating a task state of the task. The processing circuitry may be configured to determine at least one parameter of a resource-utility function of the task using the resource of the sensor or effector and the task state. The data may indicate the parameterized resource-utility function. Alternatively, the data may indicate the at least one parameter.

In other examples, the apparatus 300 further comprises third interface circuitry configured to receive third data indicating the task state of the task. The third interface circuitry may receive the third data from an interface to an operator (e.g., a human) which generates the task or to an automatic task generation module (e.g., generating tasks when predefined conditions are fulfilled). Additionally or alternatively, the third interface circuitry may receive the third data from a task state module for controlling or tracking the task state of the task. The apparatus 300 may, e.g., regularly, receive an update of the current task state. Further, the interface circuitry may be configured to send fourth data indicating the task state for allocating the resource of the further sensor or effector to the task. This may allow a local resource allocator of the sensor or effector to determine the parameter of a resource-utility function itself. The latter may simplify the resource allocation process since the local resource allocator has control over the limited resources of the sensor or effector.

In some examples, the processing circuitry 310 is configured to preset the resource of the sensor or effector and generate the data using the preset resource. This may be beneficial for an initialization of the resource allocation since the determination of resources of the sensor to be allocated to the task may depend on the determination of resources of the further sensor. For instance, during initialization the processing circuitry 310 may preset the resource of the sensor to 0 (i.e., to 0 % (per cent) of a total resource of the sensor). Further, the processing circuitry 310 may consider a certain setting of the interconnected system or of the task for presetting the resource of the sensor, thus, assigning fixed resource values (e.g., temporarily) to the sensor as indicated by the setting. This may enable, e.g., increasing or decreasing the share of the global resource of the task contributed by the sensor in the task operation, i.e., to prefer or disadvantage the sensor among the sensors and/or effectors of the interconnected system. The presetting may further enable a simplification of the resource allocation when needed, e.g., in case a particularly fast resource allocation is required, or the resource allocation process led to erroneous resource values. Hence, the apparatus 300 may enable a high configurability and reliability of the interconnected system.

In some examples, the processing circuitry 320 is further configured to select the sensor or effector from a plurality of sensors or a plurality of effectors, respectively. For instance, the apparatus 300 may check on the availability or applicability of resources of each of the sensors or effectors and select the sensor or effector accordingly. This may simplify the global resource allocation to the task since some sensors or effectors may be previously excluded from, e.g., a QoS optimization, thus, reducing the dimension of the mathematical problem.

In some examples, the apparatus 300 further comprises fourth interface circuitry configured to receive fifth data indicating the resource of the further sensor or effector. The processing circuitry 310 may further be configured to determine a global resource to be allocated to the task using the resource of the sensor or effector and the resource of the further sensor or effector. In particular, the resource of the sensor and the resource of the further sensor may constitute the global resource.

In some examples, the processing circuitry 310 is further configured to generate sixth data indicating that the resource of the further sensor or effector is allocated to the task. The interface circuitry 320 may further be configured to send the sixth data for triggering an update of the resource of the sensor or effector. In this manner, the apparatus 300 may enable a regular update of the resources for optimizing the global resource allocation or for adapting to changing task states, environmental conditions or alike.

The apparatus 300 may support a local determination of the resource of the sensor or effector which contributes to the global resource of the interconnected system. This may enable a distributed computation of the resources (i.e., based on edge computing) in a sensor/effector network which may result in a simplification of said computation. Further, the distributed computation of the resources may decrease the interconnected system's failure rate and enable subparts (platforms) of the interconnected systems to contribute to the computation even with a low computational capability.

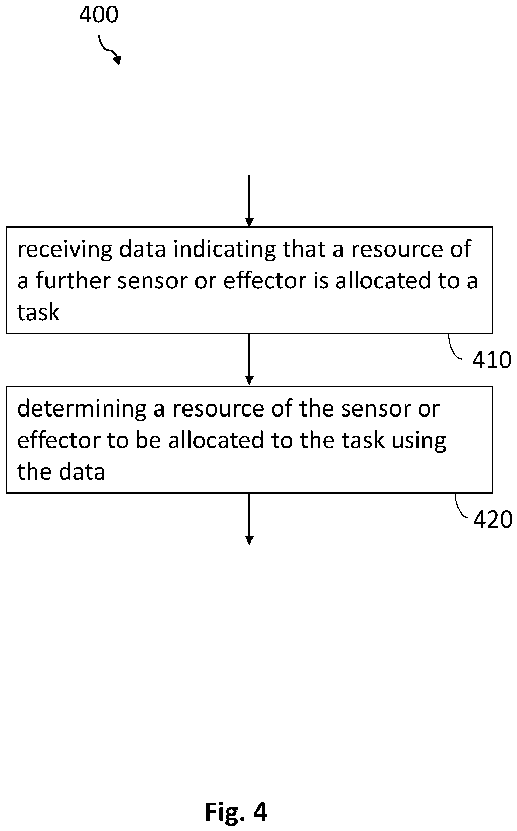

**Fig. 4** illustrates a flowchart of an example of a method 400 for determining a resource of a sensor or effector. The method 400 comprises receiving 410 data indicating that a resource of a further sensor or effector is allocated to a task. The method 400 further comprises determining 420 the resource of the sensor or effector to be allocated to the task using the data.

More details and aspects of the method 400 are explained in connection with the proposed technique or one or more examples described above, e.g., with reference to Fig. 1. The method 400 may comprise one or more additional optional features corresponding to one or more aspects of the proposed technique, or one or more examples described above.

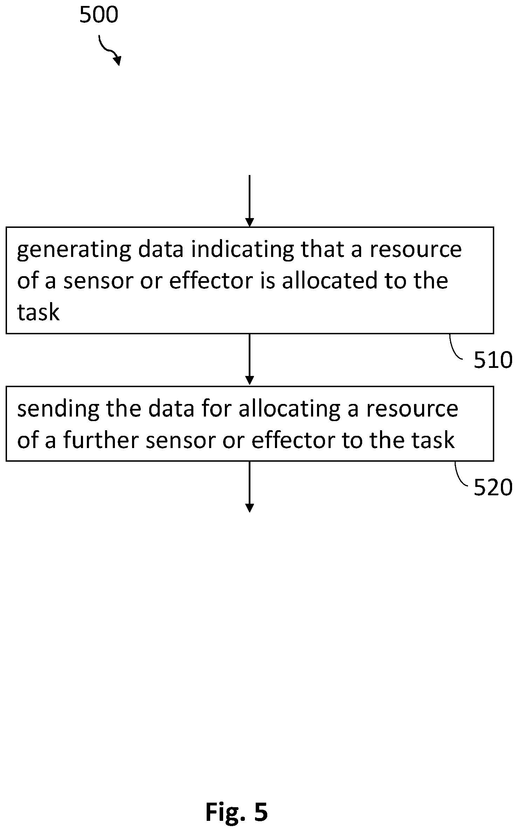

**Fig. 5** illustrates a flowchart of an example of a method 500 for controlling resources to be allocated to a task. The method 500 comprises generating 510 data indicating that a resource of a sensor or effector is allocated to the task. The method 500 further comprises sending 520 the data for allocating a resource of a further sensor or effector to the task.

More details and aspects of the method 500 are explained in connection with the proposed technique or one or more examples described above, e.g., with reference to Fig. 3. The method 500 may comprise one or more additional optional features corresponding to one or more aspects of the proposed technique, or one or more examples described above.

The method 400 and the method 500 may enable a distributed computation of resources in a sensor/effector network.

**Fig. 6** and **Fig. 7** illustrate a resource-against-utility plot of a first and a second example of a resource-utility function 600 and 700, respectively. The resource-utility functions 600 and 700 in both examples may represent a concave majorant of resource-utility configurations. The resource-utility functions 600 and 700 may be generated by an apparatus for a sensor or effector (such as apparatus 100) or an apparatus for controlling resources to be allocated to a task (such as apparatus 300). The resource-utility functions 600 and 700 may be used by an apparatus for a sensor or effector for determining a resource of the sensor or effector to be allocated to a task while considering the utility which is achievable with the determined resource. In the example shown in Fig. 6, the resource-utility function 600 is continuous and completely describes the concave majorant. The resource-utility function 600 may be the rational function of Equation 3, thus, it may be parameterized by three scalar values. In the example shown in Fig. 7, the resource-utility function 700 partially describes the concave majorant by a set of discrete resource-utility values (indicated by dots) on or near the concave maj orant.

**Fig. 8a, 8b and 8c** illustrate examples of an interconnected system 800 comprising a plurality of sensors and/or effectors (sensors/effectors). The interconnected system 800 comprises task managers (TM), sensor (and/or effector) managers (SEM) and sensors/effectors (S/E). The TM, SEM, S/E are, optionally, integrated into different platforms (which may be, e.g., a an aircraft, a naval platform or alike). The task managers may be apparatuses for controlling resources to be allocated to the respective task, such as apparatus 300, as described herein. The sensor managers may be resource allocators or apparatuses for a respective sensor or effector, such as apparatus 100, as described herein. The sensors/effectors and respective sensor managers may be part of a sensor or effector system, such as system 200, as described herein. The sensors/effectors may include the sensor or effector and/or the further sensor or effector, as described herein. The task managers may be communicatively connected to one or more of the sensor managers, optionally, via a communication link between at least two platforms.

In Fig. 8a, the interconnected system 800 comprises the task managers TM1 for task 1 and TM2 for task 2, the sensors/effectors S/E1 and S/E2 and the sensor managers SEM1 for S/E1 and SEM2 for S/E2. In Fig. 8a, the task managers, the sensors/effectors and the sensor managers are integrated in Platform 1.

In Fig. 8b, the interconnected system 800 comprises the task managers TM1 for task 1, TM2 for task 2, TM3 for task 3, the sensors/effectors S/E1, S/E2, S/E3 and S/E4 and the sensor managers SEMI, SEM2, SEM3 and SEM4 for S/E1, S/E2, S/E3 and S/E4, respectively. In Fig. 8b, TM1, TM2, S/E1, S/E2, SEM1 and SEM2 are integrated into Platform 1, and TM3, S/E3, S/E4, SEM3 and SEM4 are integrated into Platform 2 which is connected to Platform 1 via a communication link. In Fig. 8b, task 1 is executed by S/E1 and S/E2 on platform 1, task 2 is executed by S/E2 on platform 1 and S/E3 on platform 2, and task 3 is executed by S/E3 and S/E4 on platform 2. Alternatively, a "remote task 2" instead of task 2 could be created on platform 2 to represent task 2. Although the latter implementation may involve different computing modules, the resource management may be the same.

In Fig. 8c, the interconnected system 800 comprises the task managers TM1 for task 1 and TM2 for task 2, the sensors/effectors S/E1 and S/E2 and the sensor managers SEM1 for S/E1 and SEM2 for S/E2. In Fig. 8c, TM1, S/E1 and SEM1 are integrated into Platform 1, and TM2, S/E2 and SEM2 are integrated into Platform 2 which is connected to Platform 1 via a communication link.

It is to be noted that the examples shown in Fig. 8a, 8b and 8c are merely meant for illustration purposes. In other examples than those shown in Fig. 8a, 8b and 8c, the number of task managers, sensors/or effectors and/or sensor managers in the interconnected system 800 may be different: The interconnected system 800 may comprise a number $x \geq 0$ of task managers (since they are optional), a number $y \geq 2$ of sensors/effectors (at least including the sensor or effector and the further sensor or effector) and a number $z \geq 2$ of sensor managers (e.g., controlling the resource allocation of a respective one of the sensor and the further sensor). In some examples, two or more sensors/effectors may share the same sensor manager, i.e., the number y and the number z is not necessarily the same. The interconnected system 800 may further perform a different number of tasks than shown in Fig. 8a, 8b and 8c: The interconnected system 800 may perform a number $p \geq 1$ of tasks. In some examples, a task manager may control more than one task. In some examples, a task may be controlled by more than one task manager. In some examples, some tasks of the interconnected system 800 may be controlled by a task manager and further tasks may be controlled without task managers (i.e., the resource allocation may be performed by the distributed sensor managers). In other examples than those shown in Fig. 8a, 8b and 8c, a platform may be a remote sensor/effector carrier, i.e., comprising at least one sensors or effector without any task manager, sensor manager and/or an interface to an operator. In other examples, the communicative interconnections may be different than those shown in Fig. 8a, 8b and 8c: For example, a communication link may be provided between one or more sensor managers, or not all task managers may be necessarily interconnected. The interconnected system 800 may further comprise a different number of platforms than shown in Fig. 8a, 8b and 8c: The interconnected system 800 may comprise a number $q \geq 1$ of platforms. Further, the number of platforms, task managers, sensor managers, and/or sensors/effectors of the interconnected system 800 may change over time, e.g., when a platform is connected to/disconnected from the interconnected system 800 or exchanged by a different platform. Further, the number of tasks performed by the interconnected system 800 may change over time, e.g., depending on operation requirements.

In the examples of Fig. 8a, 8b and 8c, the task managers provide concave majorant descriptions to the sensor managers. The sensor managers may allocate the local resource of sensors/effectors and inform the task manager of the result. This process may repeat iteratively. The sensors/effectors may receive the resource allocation and configure themselves accordingly. The platforms may communicate to the sensor managers and/or the task managers information relevant for the resource allocation, such as the current resource allocations for tasks, the current task state of tasks, the state of the platforms in the system (e.g., position and velocity of the platform) as well as the state of the sensors/effectors on the platforms.

The task managers may perform the following steps:

T1) Sensors/effectors on the same or remote platforms may be selected to support a task

T2) Data indicating the resource of a sensor or effector (of the sensors/effectors) may be generated (e.g., a concave majorant (description) is computed for the sensor or effector); optionally, data for several or all of the sensors/effectors that support the task may be generated accordingly

T3) The data (e.g., concave majorant description) may be communicated to the respective sensor manager (optionally, the concave majorant description may be accompanied by the mapping $\Phi_{kl}$ describing the sensor/effector specific control parameter configurations associated with the concave majorant description)

T4) The task managers may receive back the determined resource allocation, e.g., from each of the sensors/effectors

T5) Steps T1) to T4) may be repeated with a specified update rate or until a termination criterion is reached

The sensor managers may perform the following processes:

S1) The data (e.g., concave majorant descriptions) may be received from the task managers for tasks that the respective sensor supports

S2) The resource allocation sub-problem for the resource dimensions that the respective sensor/effector possesses may be solved

S3) The corresponding task manager may be informed of the resulting resource allocation at the respective sensor/effector

S4) The sensor/effector may be configured for each task to operate within the resource allocation

Note that the latter-mentioned sensor configuration may be performed, e.g., at the end of every iteration, or alternatively, after an equilibrium has been reached. Further, there may be different cycle times in the interconnected system 800, for example, the resource allocations may be updated at the sensor/effectors more often than they are communicated to the other platforms. This may reduce the amount of communication between platforms. The task manager may provide a mapping function allowing the sensor/effector to determine its control parameter configuration from the resulting resource allocation. Alternatively, the sensor/effector may perform a subsequent step to determine the (suitable) control parameter configuration that match the allocated resource.

The following is a concrete implementation example for the interconnected system 800 shown in Fig. 8c:
Task 1 and task 2 may be search tasks, thus, the interconnected system 800 may execute both tasks. Platform 1 and platform 2 may comprise a respective multifunctional radio frequency system. The sensors S/E1 (which may be the sensor or effector as described herein) and S/E2 (which may be the further sensor or effector) may be radio frequency sensors capable of executing the search tasks. The search tasks may have the objective of probing a single point in space for targets. The sensors may be able to scan in space electronically, therefore, they may be capable of dynamically varying the time and energy that is directed towards any point in space. For instance, the resource that each sensor allocates may be the percentage of time budget that is used for the search task. The control parameters may be, e.g., the dwell duration, i.e., the time duration that the sensor scans the point in space, and the repetition interval, i.e., the time between scans of the point in space. The quality of the tasks may be the respective expected time to detect a target at the point in space. The quality requirement may be an expected time for a detection between 1s to 20s (seconds) with a linear preference between these values. The utility function may be a concave function of resource due to the composition of the quality model with the quality requirements.

The distance between the point in space for task 1, and S/E1 and S/E2 may be 50km (kilometers) and 70km, respectively. The distance between the point in space for task 2, and S/E1 and S/E2 may be 40km and 60km, respectively. Both multifunctional radio frequency systems may achieve a unity signal-to-noise ratio at a range of 100km with a 10ms dwell length. The detector probability of false alarm is assumed as $10e^{-6}$, the target fluctuations for the object to be detected is assumed as Swerling 3. A total resource availability of both sensors is assumed to be 0.5% for the two tasks. For comparative purposes, it is assumed that the total resource of S/E1 and S/E2 exhibit the same absolute value. In other examples, the total resource of S/E1 may differ from the total resource of S/E2.

For the above concrete implementation example, **Fig. 9a and 9b** illustrate an example of an utility 900a and 900b (indicated by the utility contours) for four iterations depending on a resource provided by S/E1 (sensor 1) and S/E2 (sensor 2). Fig. 9a illustrates the utility 900a achievable with the resource allocated at each of the sensors S/E1 (horizontal axis: resource sensor 1) and S/E2 (vertical axis: resource sensor 2) for task 1. Fig. 9b illustrates the utility 900b achievable with the resource allocated at each of the sensors S/E1 (horizontal axis: resource sensor 1) and S/E2 (vertical axis: resource sensor 2) for task 2. As derivable from the distances between sensors and targets, Fig. 9a and 9b confirm that S/E1 has an advantage over S/E2 in performing both tasks - i.e., S/E1 needs less resource than S/E2 to achieve the same utility, e.g., S/E1 needs 0.1% for achieving a utility of 0.1 where S/E2 needs about 0.38% for achieving a utility of 0.1 for task 1 (see Fig. 9a: contour line 0.1 on the very left).

Fig. 9a and Fig. 9b further illustrate straight horizontal and vertical lines (e.g., S1 (S/E1) T1 (task 1) I1 (iteration 1), S2 T1 I1, etc.) that mark the concave majorants of a respective one of S/E1 and S/E2 at a respective iteration I. The lines correspond to the concave majorants illustrated in **Fig. 10a to 10d** which show the resource-utility plots 1000a, 1000b, 1000c, 1000d for S/E1 and task 1, for S/E2 and task 1, for S/E1 and task 2, and for S/E2 and task 2, respectively. The concave majorants shown in Fig. 10a to 10d further change (e.g., by parameter adaption of the resource-utility function) for each of the four iterations mentioned in Fig. 9a and 9b. Note that, for the above concrete implementation example, the resource allocation space for each task is two dimensional, the resource allocation problem is four dimensional, and the concave majorant description describes a function with one input dimension. In the example shown in Fig. 9a and 9b, the resource allocation changes with each iteration, resulting in the concave majorants being moved. In the example shown in Fig. 9a and 9b, an equilibrium is found after four iterations, resulting in an optimized resource allocation (indicated by the star). In other examples, an equilibrium is found after a different number of iterations. An equilibrium may be found after a number of iterations $i \geq 1$.

In the above concrete implementation example, the concave majorant is the rational function of Equation 3. For instance, a corresponding concave majorant description may be the set of parameters {*a b c*}. These parameters may completely describe the concave majorant. It may be necessary to determine these parameters for the task state $\theta_k$ and the resource allocations at the further sensors of the platforms $\mathbf{r}_{kl}$. For instance, the rational function of Equation 3 may be fitted, iteratively, to samples generated using a utility function and a quality and resource model. Alternatively, a predefined mapping between task states and parameters may be used which may be faster. The placement of the lines of Fig. 10a to 10d in the multidimensional resource space is illustrated by Fig. 9a and 9b.

The following is a description of the iterations for the above concrete implementation example:

Iteration 1

The first iteration may start with presetting resource allocations r for the sensors and tasks, e.g., the resource of S/E1 for task 1 may be $r_{11} = 0$, S/E1 for task 2 $r_{21} = 0$, S/E2 for task 1 $r_{12} = 0$, and S/E2 for task 2 $r_{22} = 0$.

The task managers may perform the following processes (e.g., in parallel):

T1) All sensors are selected to support all tasks

T2) TM1 may produce the concave majorant description {$a = 1$, $b = -8.88 \times 10^{-4}$, $c = -1.005 \times 10^{-11}$} for S/E1 (as indicated by S1 T1 I1 in Fig. 9a); TM2 may produce the concave majorant description {$a = 1$, $b = -3.64 \times 10^{-4}$, $c = -5.017 \times 10^{-14}$} for S/E1 (as indicated by S1 T2 I1 in Fig. 9b); TM1 may produce the concave majorant description {$a = 1$, $b = -3.41 \times 10^{-3}$, $c = -4.834 \times 10^{-11}$} for S/E2 (as indicated by S2 T1 I1 in Fig. 9a); TM2 may produce the concave majorant description {$a = 1$, $b = -1.84 \times 10^{-3}$, $c = -5.857 \times 10^{-12}$} for S/E2 (as indicated by S2 T2 I1 in Fig. 9b)

T3) The concave majorant descriptions may be communicated to the respective sensor managers

T4) The task managers may receive back the resource allocation as described below

T5) The next iteration may be initiated

The sensor managers may perform the following processes (e.g., in parallel):

S1) The concave majorant descriptions described above may be received

S2) Each sensor manager may solve the resource allocation problem, e.g., by using Equation 4:

$$\lambda = \left( \frac{\sum_k \sqrt{a_k c_k - b_k}}{\hat{r}_l + \sum_k c_k} \right)^2$$

$$r_{kl} = \frac{1}{\sqrt{\lambda}} \sqrt{a_k c_k - b_k} - c_k$$

Equation 4

where:

$\lambda$ is a Lagrange multiplier, and $a_k$, $b_k$, $c_k$ are parameters of a resource-utility function for task k.

S3) The sensor managers may inform the task managers of the resource allocation at S/E1 for task 1 $r_{11} = 0.3\%$, S/E1 for task 2 $r_{21} = 0.2\%$, S/E2 for task 1 $r_{12} = 0.29\%$, and S/E2 for task 2 $r_{22} = 0.21\%$

S4) The sensor managers may wait until equilibrium is reached

Iteration 2

Iteration 2 may follow similar steps as iteration 1 with different values:

T2*) TM1 may produce the concave majorant description {$a = 1.007$, $b = -2.858 \times 10^{-4}$, $c = 7.3 \times 10^{-4}$} for S/E1 (as indicated by S1 T1 12 in Fig. 9a), TM2 may produce the concave majorant description {$a = 1.007$, $b = 4.019 \times 10^{-5}$, $c = 4.88 \times 10^{-4}$} for S/E1 (as indicated by S1 T2 12 in Fig. 9b), TM1 may produce the concave majorant description {$a = 1.081$, $b = 0.01567$, $c = 0.02249$} for S/E2 (as indicated by S2 T1 12 in Fig. 9a), TM2 may produce the concave majorant description {$a = 1.039$, $b = 0.01393$, $c = 0.01729$} for S/E2 (as indicated by S2 T2 12 in Fig. 9b)

S2*) Resource allocation at S/E1 for task 1 $r_{11} = 0.3\%$, S/E1 for task 2 $r_{21} = 0.2\%$, S/E2 For task 1 $r_{12} = 0.41\%$, and S/E2 for task 2 $r_{22} = 0.09\%$

Iteration 3

Iteration 3 may follow similar steps as iteration 1 or 2 with different values:

T2**) TM1 may produce the concave majorant description {$a = 1.014$, $b = 1.44 \times 10^{-4}$, $c = 1.268 \times 10^{-3}$} for S/E1 (as indicated by S1 T1 13 in Fig. 9a), TM2 may produce the concave majorant description {$a = 1.002$, $b = -2.549 \times 10^{-4}$, $c = 1.33 \times 10^{-4}$} for S/E1 (as indicated by S1 T2 13 in Fig. 9a), TM1 may produce the concave majorant description {$a = 1.08$, $b = 0.01524$, $c = 0.022$} for S/E2 (as indicated by S2 T1 13 in Fig. 9a), TM2 may produce the concave majorant description {$a = 1.039$, $b = 0.01444$, $c = 0.01784$} for S/E2 (as indicated by S2 T2 13 in Fig. 9b)

S3**) Resource allocation at S/E1 for task 1 $r_{11} = 0.28\%$, S/E1 for task 2 $r_{21} = 0.22\%$, S/E2 for task 1 $r_{12} = 0.45\%$,

and S/E2 for task 2 $r_{22}$ = 0.05%.

Iteration 4

Iteration 4 may follow similar steps as iteration 1, 2 or 3 with different values:

T2***) TM1 may produce the concave majorant description {$a$ = 1.013, $b$ = 2.565 × $10^{-4}$, $c$ = 1.386 × $10^{-3}$}for S/E1 (as indicated by S1 T1 14 in Fig. 9a), TM2 may produce the concave majorant description {$a$ = 1.001, $b$ = -3.17 × $10^{-4}$, $c$ = 5.887 × $10^{-5}$} for S/E1 (as indicated by S1 T2 14 in Fig. 9a), TM1 may produce the concave majorant description {$a$ = 1.075, $b$ = 0.01291, c = 0.01938} for S/E2 (as indicated by S2 T1 14 in Fig. 9a), TM2 may produce the concave majorant description {$a$ = 1.043, $b$ = 0.01756, c = 0.02116} for S/E2 (as indicated by S2 T2 14 in Fig. 9b) S3***) Resource allocation at S/E1 for task 1 $r_{11}$ = 0.27%, S/E1 for task 2 $r_{21}$ = 0.23%, S/E2 for task 1 $r_{12}$ = 0.5%, and S/E2 for task 2 $r_{22}$ = 0%

After the fourth iteration, the resource allocation for the above concrete implementation example reaches an equilibrium, e.g., no further (or no major) changes to the values may occur in further iterations. Further, each sensor manager may decide on the control parameters for each task at each sensor, which in the concrete implementation example are the revisit interval and dwell duration. Examples of the resulting control parameters are:

Task 1 - quality: 5.1s, utility: 0.74

S/E1 - revisit interval: 1.97s, dwell duration: 5.4ms (milliseconds)
S/E2 - revisit interval: 3.18s, dwell duration: 15.9ms

Task 2 - quality: 3.18s, utility: 0.84

S/E1 - revisit interval: 1.05s, dwell duration: 2.4ms
S/E2 - revisit interval: -, dwell duration: 0ms

For a relative importance of task 1 and task 2 being 0.5, respectively, the total system utility (of the interconnected system 800 of Fig. 8c) is 0.5 ▪ 0.74 + 0.5 ▪ 0.84 = 0.79.
The techniques described herein may provide an optimized and fast solution to the problem of the concrete implementation example. The said solution may be close to or match an optimum which would be reached if the problem had been solved in a conventional, centralized manner using Equation 1. For solving the problem in a centralized way, it would have been necessary to solve a four-dimensional problem. Instead, the distributed computation as described herein may solve four one-dimensional sub-problems (e.g., in parallel) and iterate four times. The distributed computation may, thus, have a lower computational complexity than the centralized approach. For increasing the dynamics of the system, the sensors may be configured and operated at the end of each iteration.
Methods and apparatuses described herein may enable a distributed resource management, thus, therefore, rendering unnecessary to use a centralized resource management. The methods and apparatuses may allow tasks to be generated at any platform in an interconnected system and executed by any sensor in the interconnected system. The methods and apparatuses may allow platforms and/or sensors to be easily added or removed in the interconnected system, e.g., by simple adjustments in the resource allocation. The methods and apparatuses may prevent a single point of failure, e.g., by using a distributed approach.
The methods and apparatuses may reduce the complexity of the resource allocation. The methods and apparatuses may enable solving a QoS optimization with fewer computational efforts, e.g., by repetitively solving parallel sub-problems. The methods and apparatuses may enable platforms with modest computational capabilities to contribute to the resource management of an interconnected system. The methods and apparatuses may ensure that solving the sub-problems converge to the optimum of the centralized resource allocation problem, e.g., by using a concave majorant or concave majorant descriptions. Unlike conventional methods like centralized Q-RAM, the methods and apparatuses may enable solving resource allocation problems with dependencies between tasks.
The following examples pertain to further embodiments:

Embodiment (1) is an apparatus for a sensor or effector. The apparatus comprises interface circuitry configured to receive data indicating that a resource of a further sensor or effector is allocated to a task and processing circuitry configured to determine a resource of the sensor or effector to be allocated to the task using the data.

Embodiment (2) is the apparatus of (1), further comprising second interface circuitry configured to send second data indicating the determined resource for determining a global resource of the sensor or effector and the further sensor or effector to be allocated to the task. Embodiment (3) is the apparatus of (1) or (2), wherein the processing circuitry is configured to determine the resource of the sensor or effector using a resource-utility function of the task.

Embodiment (4) is the apparatus of (3), wherein the resource-utility function represents a concave majorant of resource-utility instantiations configurations.

Embodiment (5) is the apparatus of (3) or (4), wherein the interface circuitry is further configured to receive third data indicating a task state of the task. The processing circuitry is configured to determine at least one parameter of the resource-utility function using the resource of the further sensor or effector and the task state. The processing circuitry is further configured to determine the resource of the sensor or effector using the parameterized resource-utility function.

Embodiment (6) is the apparatus of (3) or (4), wherein the data indicates the resource-utility function. The resource-utility function exhibits at least one parameter encoding the resource of the further sensor or effector.

Embodiment (7) is the apparatus of any one of (1) to (6), wherein the processing circuitry is configured to determine the resource of the sensor or effector without a total resource of the sensor or effector exceeding a predefined threshold. The total resource is to be allocated to the task and at least one further task to be executed by the sensor or effector.

Embodiment (8) is the apparatus of (7), wherein the processing circuitry is further configured to determine the resource of the sensor or effector by solving a Lagrangian function for finding a maximum of a combined resource-utility function of the task and the further task.

Embodiment (9) is the apparatus of any one of (1) to (8), further comprising third interface circuitry configured to send fourth data indicating the determined resource of the sensor or effector for triggering an update of the resource of the further sensor or effector. The interface circuitry is further configured to receive fifth data indicating that an updated resource of the further sensor or effector is allocated to the task. The processing circuitry is further configured to determine an updated resource of the sensor or effector to be allocated to the task using the fifth data.

Embodiment (10) is the apparatus of any one of (1) to (9), wherein the interface circuitry is further configured to receive sixth data indicating an updated task state of the task. The processing circuitry is configured to determine at least one updated parameter of the resource-utility function using the updated resource of the further sensor or effector and the updated task state. The processing circuitry is further configured to determine the updated resource of the sensor or effector using the updated parameterized resource-utility function.

Embodiment (11) is the apparatus of (6) and (9), wherein the fifth data indicates at least one updated parameter of the resource-utility function encoding the updated resource of the further sensor or effector. The processing circuitry is configured to determine the updated resource of the sensor or effector using the updated parameterized resource-utility function.

Embodiment (12) is a sensor or effector system, comprising an apparatus of any one of (1) to (11) and the sensor or effector. The sensor or effector is configured to execute the task using the determined resource of the sensor or effector.

Embodiment (13) is the sensor or effector system of (12), wherein the sensor or effector is at least one of a radar sensor and a radio frequency sensor or at least one of a radar effector or a radio frequency effector, respectively.

Embodiment (14) is an apparatus for controlling resources to be allocated to a task, comprising processing circuitry configured to generate data indicating that a resource of a sensor or effector is allocated to the task and interface circuitry configured to send the data for allocating a resource of a further sensor or effector to the task.

Embodiment (15) is the apparatus of (14), further comprising second interface circuitry configured to receive second data indicating the resource of the sensor or effector, wherein the processing circuitry is configured to generate the data using the resource of the sensor or effector.

Embodiment (16) is the apparatus of (15), wherein the second interface circuitry is further configured to receive third data indicating a task state of the task. The processing circuitry is configured to determine at least one parameter of a resource-utility function of the task using the resource of the sensor or effector and the task state. The data indicates the parameterized resource-utility function.

Embodiment (17) is the apparatus of (14) or (15), further comprising third interface circuitry configured to receive third data indicating the task state of the task. The interface circuitry is configured to send fourth data indicating the task state for allocating the resource of the further sensor or effector to the task.

Embodiment (18) is the apparatus of any one of (14) to (17), wherein the processing circuitry is configured to preset the resource of the sensor or effector and generate the data using the preset resource.

Embodiment (19) is the apparatus of any one of (14) to (18), wherein the processing circuitry is further configured to select the sensor or effector from a plurality of sensors or a plurality of effectors, respectively.

Embodiment (20) is the apparatus of any one of (14) to (19), further comprising fourth interface circuitry configured to receive fifth data indicating the resource of the further sensor or effector. The processing circuitry is further configured to determine a global resource to be allocated to the task using the resource of the sensor or effector and the resource of the further sensor or effector.

Embodiment (21) is the apparatus of (20), wherein the processing circuitry is further configured to generate sixth data indicating that the resource of the further sensor or effector is allocated to the task. The interface circuitry is further configured to send the sixth data for triggering an update of the resource of the sensor or effector.

Embodiment (22) is a method for determining a resource of a sensor or effector, comprising receiving data indicating that a resource of a further sensor or effector is allocated to a task and determining the resource of the sensor or effector to be allocated to the task using the data.

Embodiment (23) is a method for controlling resources to be allocated to a task, comprising generating data indicating that a resource of a sensor or effector is allocated to the task and sending the data for allocating a resource of a further sensor or effector to the task.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. An apparatus (100) for a sensor or effector, comprising:

   interface circuitry (110) configured to receive data (130) indicating that a resource of a further sensor or effector is allocated to a task; and
   processing circuitry (120) configured to determine a resource (140) of the sensor or effector to be allocated to the task using the data.

2. The apparatus (100) of claim 1, further comprising second interface circuitry configured to send second data indicating the determined resource (140) for determining a global resource of the sensor or effector and the further sensor or effector to be allocated to the task.

3. The apparatus (100) of claim 1 or 2, wherein the processing circuitry (120) is configured to determine the resource (140) of the sensor or effector using a resource-utility function of the task.

4. The apparatus (100) of claim 3, wherein the resource-utility function represents a concave majorant of resource-utility configurations.

5. The apparatus (100) of claim 3 or 4, wherein the interface circuitry (110) is further configured to receive third data indicating a task state of the task, and wherein the processing circuitry (120) is configured to:

   determine at least one parameter of the resource-utility function using the resource of the further sensor or effector and the task state; and
   determine the resource (140) of the sensor or effector using the parameterized resource-utility function.

6. The apparatus (100) of claim 3 or 4, wherein the data indicates the resource-utility function, wherein the resource-utility function exhibits at least one parameter encoding the resource of the further sensor or effector.

7. The apparatus (100) of any one of the previous claims, wherein the processing circuitry (120) is configured to determine the resource (140) of the sensor or effector without a total resource of the sensor or effector exceeding a predefined threshold, and wherein the total resource is to be allocated to the task and at least one further task to be executed by the sensor or effector.

8. The apparatus (100) of claim 7, wherein the processing circuitry (120) is further configured to determine the resource (140) of the sensor or effector by solving a Lagrangian function for finding a maximum of a combined resource-utility function of the task and the further task.

9. The apparatus (100) of any one of the previous claims, further comprising third interface circuitry configured to send fourth data indicating the determined resource (140) of the sensor or effector for triggering an update of the resource of the further sensor or effector, wherein the interface circuitry (110) is further configured to receive fifth data indicating that an updated resource of the further sensor or effector is allocated to the task, and wherein the processing circuitry (120) is further configured to determine an updated resource of the sensor or effector to be allocated to the task using the fifth data.

10. The apparatus (100) of claim 5 and 9, wherein the interface circuitry (110) is further configured to receive sixth data indicating an updated task state of the task, and wherein the processing circuitry (120) is configured to:

    determine at least one updated parameter of the resource-utility function using the updated resource of the further sensor or effector and the updated task state; and
    determine the updated resource of the sensor or effector using the updated parameterized resource-utility function.

11. The apparatus (100) of claim 6 and 9, wherein the fifth data indicates at least one updated parameter of the resource-utility function encoding the updated resource of the further sensor or effector, and wherein the processing circuitry (120) is configured to determine the updated resource of the sensor or effector using the updated parameterized resource-utility function.

12. A sensor or effector system (200), comprising:

an apparatus (210) of any one of claims 1 to 11; and
the sensor or effector (220), wherein the sensor or effector (220) is configured to execute the task using the determined resource of the sensor or effector (220).

13. The sensor or effector system (200) of claim 12, wherein the sensor or effector (220) is at least one of a radar sensor and a radio frequency sensor or at least one of a radar effector or a radio frequency effector, respectively.

14. An apparatus (300) for controlling resources to be allocated to a task, comprising:

processing circuitry (310) configured to generate data indicating that a resource of a sensor or effector is allocated to the task; and
interface circuitry (320) configured to send the data for allocating a resource of a further sensor or effector to the task.

15. The apparatus (300) of claim 14, further comprising second interface circuitry configured to receive second data indicating the resource of the sensor or effector, wherein the processing circuitry (310) is configured to generate the data using the resource of the sensor or effector.

16. The apparatus (300) of claim 15, wherein the second interface circuitry is further configured to receive third data indicating a task state of the task, wherein the processing circuitry (310) is configured to determine at least one parameter of a resource-utility function of the task using the resource of the sensor or effector and the task state, and wherein the data indicates the parameterized resource-utility function.

17. A method (400) for determining a resource of a sensor or effector, comprising:

receiving (410) data indicating that a resource of a further sensor or effector is allocated to a task; and
determining (420) the resource of the sensor or effector to be allocated to the task using the data.

18. A method (500) for controlling resources to be allocated to a task, comprising:

generating (510) data indicating that a resource of a sensor or effector is allocated to the task; and
sending (520) the data for allocating a resource of a further sensor or effector to the task.

100

130

110

120

140

**Fig. 1**

200

210

220

**Fig. 2**

300

310

320

**Fig. 3**

400

receiving data indicating that a resource of a further sensor or effector is allocated to a task

410

determining a resource of the sensor or effector to be allocated to the task using the data

420

**Fig. 4**

500

generating data indicating that a resource of a sensor or effector is allocated to the task

510

sending the data for allocating a resource of a further sensor or effector to the task

520

**Fig. 5**

600

**Fig. 6**

700

**Fig. 7**

Fig. 8a

800

**Fig. 8b**

800

| Platform 1 | | Platform 2 |
|---|---|---|

Resource Allocations

Task 1

TM 1

Communication
Link

Task 2

TM 2

Concave majorant
descriptions

SEM 1

S/E 1

SEM 2

S/E 2

**Fig. 8c**

900a

## Utility for Task 1

**Fig. 9a**

900b

## Utility for Task 2

Fig. 9b

1000a

**Concave Majorants for Task 1 at Sensor 1**

Fig. 10a

1000b

**Concave Majorants for Task 1 at Sensor 2**

Fig. 10b

1000c

**Concave Majorants for Task 2 at Sensor 1**

Legend:
- Iteration 1 (I1)
- Iteration 2 (I2)
- Iteration 3 (I3)
- Iteration 4 (I4)

Y-axis: Utility
X-axis: Resource Sensor 1 (%)

**Fig. 10c**

1000d

**Concave Majorants for Task 2 at Sensor 2**

Fig. 10d

Europäisches
Patentamt

European
Patent Office

Office européen
des brevets

# EUROPEAN SEARCH REPORT

**Application Number**

**EP 22 17 8674**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/262324 A1 (MATHISKE BERND J [US]) 24 November 2005 (2005-11-24) * paragraph [0019]; figure 1 * ----- | 1,14,17, 18 | INV. G06F9/50 H04W72/04 |
| X | US 2012/192186 A1 (BORNSTEIN DANIEL R [US] ET AL) 26 July 2012 (2012-07-26) * paragraph [0046]; figure 1 * ----- | 1,14,17, 18 | |
| X | CHARLISH ALEXANDER: "Tasking networked multi-function radar systems for active tracking", 2013 14TH INTERNATIONAL RADAR SYMPOSIUM (IRS), IEEE, vol. 1, 19 June 2013 (2013-06-19), pages 367-374, XP032477667, ISBN: 978-1-4673-4821-8 [retrieved on 2013-08-14] * the whole document * ----- | 1-18 | |
| | | | TECHNICAL FIELDS SEARCHED (IPC) G06F H04W |

The present search report has been drawn up for all claims

| Place of search | Date of completion of the search | Examiner |
|---|---|---|
| The Hague | 20 October 2022 | Nourestani, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 8674

This annex lists the patent family members relating to the patent documents cited in the above-mentioned European search report.
The members are as contained in the European Patent Office EDP file on
The European Patent Office is in no way liable for these particulars which are merely given for the purpose of information.

20-10-2022

| Patent document cited in search report | Publication date | Patent family member(s) | Publication date |
|---|---|---|---|
| US 2005262324 A1 | 24-11-2005 | EP 1607863 A2<br>US 2005262324 A1 | 21-12-2005<br>24-11-2005 |
| US 2012192186 A1 | 26-07-2012 | US 2012192186 A1<br>WO 2012103231 A1 | 26-07-2012<br>02-08-2012 |

EPO FORM P0459

For more details about this annex : see Official Journal of the European Patent Office, No. 12/82